(19) Europäisches Patentamt
European Patent Office
Office européen des brevets

(11) **EP 3 967 412 A1**

(12) **EUROPÄISCHE PATENTANMELDUNG**

(43) Veröffentlichungstag:
**16.03.2022  Patentblatt 2022/11**

(21) Anmeldenummer: 20195687.7

(22) Anmeldetag: **11.09.2020**

(51) Internationale Patentklassifikation (IPC):
**B07B 4/00** (2006.01)     **B09B 3/00** (2022.01)
**C22B 7/00** (2006.01)     **C22B 19/30** (2006.01)
**C22B 19/38** (2006.01)

(52) Gemeinsame Patentklassifikation (CPC):
**B07B 4/00; B09B 3/40; C22B 7/001; C22B 19/30; C22B 19/38;** C21B 2100/44; C21B 2200/00

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Montanuniversität Leoben
8700 Leoben (AT)**

(72) Erfinder:
• **Antrekowitsch, Jürgen
 8700 Leoben (AT)**
• **Steinlechner, Stefan
 8793 Trofaiach (AT)**
• **Auer, Michael
 8793 Trofaiach (AT)**

(74) Vertreter: **Dilg, Haeusler, Schindelmann
Patentanwaltsgesellschaft mbH
Leonrodstraße 58
80636 München (DE)**

(54) **VERFAHREN ZUM ENTFERNEN VON FLÜCHTIGEN BESTANDTEILEN AUS EINEM INDUSTRIESTAUB, UND WERTSTOFF-HALTIGES PRODUKT**

(57)    Es wird ein Verfahren zum Herstellen eines Wertstoff-Produkts aus einem Industriestaub beschrieben. Das Verfahren weist auf: i) Bereitstellen des Industriestaubes, welches zumindest einen Wertstoff und eine erste Konzentration flüchtiger Bestandteile aufweist, an eine Heizvorrichtung mit einer Betriebstemperatur von 600°C oder mehr, ii) Aufbereiten des Industriestaubes mittels der Heizvorrichtung, wobei das Aufbereiten aufweist: iia) Aufheizen des Industriestaubes mit einer Rate von 20°C/min oder mehr, iib) thermisches Behandeln des Industriestaubes mittels der Heizvorrichtung mit einer Behandlungstemperatur in dem Bereich 900°C bis 1200°C, insbesondere in dem Bereich 1000°C bis 1100°C, für 30 Minuten oder mehr, und iic) Steuern und/oder Regeln der oxidierenden Bedingungen während des Aufbereitens,
wobei das Aufbereiten aufweist: zumindest teilweises Entfernen der flüchtigen Bestandteile aus dem Industriestaub, und iii) Bereitstellen des Wertstoff-Produkts. Ferner wird das aufbereitete Wertstoff-Produkt beschrieben.

EP 3 967 412 A1

**Beschreibung**

Technisches Gebiet der Erfindung

Die Erfindung betrifft ein Verfahren zum Herstellen eines Wertstoff-Produkts aus einem Industriestaub. Ferner betrifft die Erfindung das Wertstoff-Produkt, welches mittels Aufbereitens des Industriestaubes erhalten wird.

Die Erfindung kann sich somit auf das technische Gebiet des Aufbereitens von Industriestäuben beziehen. Insbesondere kann sich die Erfindung auf das technische Gebiet des Entfernens von flüchtigen Bestandteilen aus Industriestäuben beziehen, um dadurch ein Wertstoff-Produkt zu erhalten.

Technischer Hintergrund

Industriestäube, beispielsweise aus der Metallerzeugung oder -verarbeitung (beispielsweise in einem Stahlwerk) enthalten oftmals erwünschte und rückgewinnbare Wertstoffe, jedoch auch unerwünschte Rückstände, welche unerwünschte Metalle (in Verbindungen und/oder elementar) und flüchtige Bestandteile (beispielsweise Halogenverbindungen) umfassen. Das ökonomische Bearbeiten von Industriestäuben zum Erhalt von aufbereiteten Wertstoff-Produkten, welche wiederum als Rohstoffquelle dienen können, stellt aber noch immer eine technische Herausforderung dar. Im Folgenden wird dies an einem Beispiel aus dem Stand der Technik verdeutlicht, in welchem der Wertstoff Zinkoxid aus Halogen-kontaminiertem Stahlwerkstaub gewonnen werden soll.

Das Hauptprodukt durch das Aufarbeiten von Stahlwerksstaub mit einem geeigneten Prozess ist sogenanntes sekundäres Zinkoxid, welches zu nahezu 100 % als Ersatz oder Ergänzung für aus Erzen gewonnene Zinkkonzentrate dienen kann. Aufgrund von Bleianteilen sowie Halogenkontaminierung, beziehungsweise der Konzentration anderer flüchtiger Bestandteile, in diesem Recycling-Produkt mit hohem Zinkoxid-Anteil ist in konventionellen Verfahren (hauptsächlich angewandt wird das sogenannte Wälzverfahren) die Substitutionsrate in der primären Zinkindustrie auf 10-15 % beschränkt. Obwohl das Wälzoxid (das ist das mit Störstoffen belastete Zinkoxid) generell gewaschen wird, ist ein Chargieren in den Röstschritt der Zinkindustrie unumgänglich, um Restgehalte von Halogenen (Fluor, Chlor, Brom oder Iod) beziehungsweise Halogenverbindungen und anderer flüchtiger Verbindungen zu entfernen. Grund hierfür ist, dass in der Zink-Gewinnungselektrolyse Chlor zu einer erhöhten Korrosion der Elektroden und Bildung von potentiell gesundheitsgefährdendem Chlorgas führen kann. Der Nachteil von Fluor im Elektrolyten liegt im Angriff und dem Auflösen der oberflächlichen Aluminium-Oxidschicht der Kathoden. Dies führt zu erhöhter Klebeneigung des raffinierten Zinks an den Kathoden und damit verbundenen Ausfallzeiten und einhergehenden Zink-Verlusten sowie erhöhtem Kathodenversschleiß.

Trotzdem ist der Ersatz von primären Erzkonzentraten durch sekundäres Zinkoxid erwünscht. Die großen Eisenfrachten, die über das Erzkonzentrat in die primäre Zinkherstellung eingeschleust werden, sorgen für einen hohen Anteil an Fällungsrückstand, für den bis heute kein wirtschaftliches Aufarbeitungsverfahren existiert und dieser daher unter hohen Kosten und Umweltauflagen deponiert werden muss. Pro Tonne produziertem Zink fällt eine Tonne Eisen-Rückstand - in erster Linie Jarosit - an. Eine Erhöhung des sekundären Zinkoxidanteiles mit naturgemäß niedrigen Eisengehalten bei der Zink-Gewinnung ist deshalb vorteilhaft. Angestrebt wird ein Zero-Waste-Prozess, in dem anstelle von Entsorgung idealerweise, beispielsweise Eisenlegierungen einer Nutzung in einem Stahlwerk und Halogen enthaltende Substanzen einer Nutzung in der chemischen Industrie, sowie Schlacken einer Nutzung in der Baustoffindustrie zugeführt werden. Dies stellt gegenüber einem Anteil von mehr als 65 % zu deponierenden Reststoffen beim Wälzprozess eine enorme Verbesserung dar.

Im Falle des Elektrolichtbogenofen-Staubes (electric arc furnace dust, EAFD) stammen die Verunreinigungen aus dem eingeschmolzenen Stahlschrott sowie zum Teil aus Schlackenbildnern. Oberflächenbeschichtungen, Lacke und Kunststofffraktionen sind gängige Quellen für den Eintrag von Halogenen in den Stahlwerksstaub. Unter den dort vorherrschenden Prozesstemperaturen verflüchtigen Chlor und Fluor als Verbindungen mit Blei, Kalium oder Natrium und sammeln sich mit anderen flüchtigen Elementen wie Cadmiumoxid und vor allem Zinkoxid im Staub. Das Hauptprodukt beim Recycling von EAFD ist das im Staub enthaltene ZnO. Dieses wird üblicherweise durch eine Reduktion mit Kohlenstoff zu Zn umgewandelt und bei Prozesstemperaturen von 1000° C-1100°C verdampft (der Siedepunkt von Zn liegt bei 907° C). Aufgrund der hohen Sauerstoffaffinität von gasförmigem Zink kommt es im Abgassystem zu einer sofortigen exothermen Rückoxidation des Zn zu ZnO, welches gleichzeitig das Produkt des Recycling-Verfahrens darstellt. Da ein Großteil der vorliegenden Halogenverbindungen im Stahlwerksstaub einen hohen Dampfdruck aufweisen, teilweise sogar Siedepunkte, die unter den Prozesstemperaturen liegen, verdampfen auch diese, sammeln sich im Produkt (ZnO) und verunreinigen dieses. Dieses Produkt findet zu nahezu 100 % als Ersatz für, aus Erzen gewonnenen, Zinkkonzentraten Anwendung in der primären Zinkindustrie. Aufgrund der Halogenbeladung sowie Bleikonzentration ist die Substitutionsrate in der primären Zinkherstellung aber auf 10-15 % beschränkt. Einerseits ist der Einsatz im Röster aufgrund der Kühlwirkung der Oxide erwünscht, zum anderen können die enthaltenen Halogenverbindungen zu unerwünschte Anbackungen führen.

Trotzdem ist der Ersatz von primären Erzkonzentraten durch sekundäres ZnO erwünscht. Um den Röstschritt zu entlasten wird das verunreinigte sekundäre ZnO, aus gängigen Recyclingverfahren wie dem Wälzrohr, einer aufwendigen, nachgeschalteten Soda-Waschung unterzogen. Dabei können zwar sehr niedrige Chlor- und Alkaligehalte erreicht werden, eine Entfernung von Blei und Fluor ist auf diese Art dennoch nicht möglich. Außerdem bestehen Varianten einer thermischen Behandlung des verunreinigten ZnO. Diese zeichnen sich jedoch nachteilig durch großen Energieverbrauch, sowie große Zinkverluste aus und es ist eine Mahlung nach der Behandlung erforderlich, um ein effizient laugbares Zinkoxid für die primäre Zinkproduktion bereitstellen zu können.

Beschreibung der Erfindung

Es ist eine Aufgabe der vorliegenden Erfindung, ein Verfahren bereitzustellen, welches das Entfernen von flüchtigen Bestandteilen aus einem Wertstoff-haltigen Industriestaub auf effiziente und robuste Weise ermöglicht.

Diese Aufgabe wird durch die Gegenstände gemäß den unabhängigen Patentansprüchen gelöst. Bevorzugte Ausgestaltungen ergeben sich aus den abhängigen Patentansprüchen.

Gemäß einem Aspekt der Erfindung wird ein Verfahren zum Herstellen eines Wertstoff-Produkts aus einem Industriestaub (in einer Heizvorrichtung) (bzw. ein entsprechendes Verfahren zum Betreiben der Heizvorrichtung) beschrieben. Das Verfahren aufweisend:

i) Bereitstellen des Industriestaubes (als Staubpartikel oder auch als agglomerierte Staubpartikel), welcher zumindest einen Wertstoff (z.B. ein Metalloxid, insbesondere Zinkoxid) und eine erste Konzentration flüchtiger Bestandteile (z. B. Halogene und Metalle, welche keinen Wertstoff darstellen) aufweist, an eine Heizvorrichtung mit einer Betriebstemperatur (also eine vorgewärmte Heizvorrichtung) von 600° C oder mehr (insbesondere 700° C oder mehr, weiter insbesondere 800° C oder mehr),

ii) Aufbereiten des Industriestaubes mittels der (vorgewärmten) Heizvorrichtung, wobei das Aufbereiten aufweist:

iia) (extrem schnelles) Aufheizen des Industriestaubes (z. B. mittels der Heizvorrichtung) mit einer Rate (bzw. möglichst hohen Anstiegsrate) von 20° C/min oder mehr (insbesondere 30° C oder mehr, weiter insbesondere 50° C oder mehr, weiter insbesondere 100° C oder mehr, weiter insbesondere 150° C oder mehr),

iib) (gezieltes) thermisches Behandeln des Industriestaubes mittels der Heizvorrichtung mit einer Behandlungstemperatur in dem Bereich 900° C bis 1200° C, insbesondere in dem Bereich 1000° C bis 1100° C, für 30 Minuten oder mehr (insbesondere 60 Minuten oder mehr, weiter insbesondere 120 Minuten oder mehr), und (zeitgleich)

iic) (gezieltes) Steuern und/oder Regeln der oxidierenden Bedingungen während des Aufbereitens (z. B. mittels Steuerns/Regelns der Zufuhr von Luft/Sauerstoff). Diese Aufbereitungsschritte werden derart durchgeführt, dass die flüchtigen Bestandteile des Industriestaubes (zumindest teilweise) entfernt werden. Das Verfahren weist ferner auf:

iii) Bereitstellen des Wertstoff-Produkts.

Das Wertstoff-Produkt, dass über die beschriebene Aufbereitung erhalten wird, weist vorzugsweise den zumindest einen Wertstoff und eine zweite Konzentration flüchtiger Bestandteile auf, welche (deutlich) geringer ist als die erste Konzentration flüchtiger Bestandteile (die flüchtigen Bestandteile wurden deutlich abgereichert bzw. (im Wesentlichen) entfernt, während der Wertstoff verbleibt, insbesondere sogar aufkonzentriert werden kann).

Der Begriff "Bereitstellen" kann in diesem Zusammenhang jegliches Zugeben von Industriestaub an/in eine Heizvorrichtung bezeichnen. Der Begriff "Staub" kann in diesem Zusammenhang jegliches Material bezeichnen, welches in Form von festen Partikeln vorliegt. Die Partikel können verschiedene Größen aufweisen und verschiedenen Ursprungs sein. In einem Beispiel können die Partikel einen gewissen Zeitraum in Gasen, insbesondere in Luft, suspendiert bleiben. In einem anderen Beispiel kann ein Staub Partikel mit Größen im Millimeter-Bereich oder weniger aufweisen, insbesondere Größen im Mikrometer Bereich.

Der Industriestaub ist der Ausgangsstoff, das Edukt, des Verfahrens; das Produkt des Verfahrens ist das Wertstoff-Produkt. Im Rahmen dieses Dokuments kann der Begriff "Industriestaub" insbesondere ein Edukt bezeichnen, welches in der produzierenden Industrie als im Wesentlichen Abfall-Stoff in Form von Staub anfällt. Beispielsweise können in der Metall-erzeugenden oder in der metallverarbeitenden Industrie metallhaltige Stäube produziert werden, beziehungsweise fallen als Produktionsabfall an. In einem exemplarischen Beispiel kann der Industriestaub bei einem Prozess in einem Stahlwerk (beispielsweise Elektrolichtbogenofen zum Schrottschmelzen) als sogenannter Stahlwerkstaub anfallen.

Im Falle iterativer Durchführung des Verfahrens kann der eingesetzte Industriestaub selbst auch ein Wertstoff-Produkt aus einer vorherigen Durchführung des Verfahrens sein, oder auf einem solchen Wertstoff-Produkt basieren.

Der Industriestaub kann mehrere Arten von Staub aus einer oder aus mehreren Quellen enthalten oder aus ihnen bestehen. Der Industriestaub kann beispielsweise pulvrig als Staubpartikel vorliegen, oder auch stückig als agglomerierte Staubpartikel, beispielsweise als Pellets.

Der Industriestaub enthält zumindest einen Wertstoff (beispielsweise ein, bevorzugt erwünschtes beziehungsweise wirtschaftlich relevantes, Metalloxid, insbesondere Zinkoxid) und eine erste Konzentration Verunreinigungen. Als Wertstoff ist hier ein Inhalt des Industriestaubes zu verstehen, dessen Verwertung als Rohstoff angestrebt wird. Neben Wertstoffen enthält der Industriestaub auch andere Inhalte - hier Verunreinigungen genannt. Diese Verunreinigungen können gegebenenfalls die Verwertung des Wertstoffes erschweren. Zur Ermöglichung einer ökonomisch und technologisch sinnvollen Verwertung wird Anreicherung des Wertstoffs beziehungsweise die zumindest teilweise Entfernung von Verunreinigungen im Industriestaub angestrebt. Ein Wertstoff-Produkt enthält zumindest einen Wertstoff, es kann auch mehrere verschiedene Wertstoffe enthalten.

Mittels des erfindungsgemäßen Verfahrens werden Verunreinigungen der Industriestäube zumindest teilweise entfernt. Das Verfahren ermöglicht ein Bereitstellen eines Wertstoff-Produkts, welches den zumindest einen Wertstoff aufweist. Das Wertstoff-Produkt weist eine im Vergleich zu einer ersten Konzentration von Verunreinigungen (gegebenenfalls flüchtige Bestandteile) im Industriestaub (gegebenenfalls deutlich) geringere zweite Konzentration von Verunreinigungen (gegebenenfalls flüchtige Bestandteile) auf. Die zweite Konzentration kann auch 0 oder im Wesentlichen 0 sein. Die Verunreinigungen werden deutlich abgereichert beziehungsweise gegebenenfalls entfernt, während der Wertstoff verbleibt, insbesondere sogar aufkonzentriert.

Erfindungsgemäß wird der Industriestaub zunächst an eine Heizvorrichtung mit einer Betriebstemperatur von größer gleich 600° C bereitgestellt. Der Industriestaub kann beispielsweise als Staub bereitgestellt werden oder nach Agglomerierung als Agglomerat. Bereitstellung umfasst, dass der Industriestaub der Heizwirkung der Heizvorrichtung zugänglich gemacht wird - beispielsweise wird er in eine Heizvorrichtung eingegeben. Die Heizvorrichtung ist also bei Bereitstellung des Industriestaubes bereits auf 600° C oder mehr vorgewärmt. Bevorzugt beträgt die Betriebstemperatur 700° C oder mehr, besonders bevorzugt 800° C oder mehr.

Im Rahmen dieses Dokuments kann unter dem Begriff "Heizvorrichtung" insbesondere jegliche Vorrichtung verstanden werden, welche geeignet ist, ein Material, insbesondere einen Industriestaub, zu erhitzen. Hierfür kann die Heizvorrichtung einen Hohlraum aufweisen, in welchen das Material eingeführt werden kann, und in welchem dann ein thermisches Behandeln stattfinden kann. Die Temperatur innerhalb der Heizvorrichtung ist insbesondere steuerbar beziehungsweise regelbar. Zudem kann, wenn beispielsweise Hitze durch Oxidationsvorgänge erzeugt wird (beispielsweise mittels Brenner), die Zufuhr von Oxidationsmittel wie Luft und/oder Sauerstoff kontrollierbar sein. Die Heizvorrichtung kann bereits aufgeheizt sein, wenn aufzuheizendes Material eingeführt wird. Zudem lässt sich mit der beschriebenen Heizvorrichtung insbesondere ein besonders schnelles Aufheizen - beispielsweise zumindest 150° C/min - realisieren. In einem Beispiel kann die Heizvorrichtung ein metallurgisches Behandlungsaggregat sein. In einem exemplarischen Beispiel ist die Heizvorrichtung ein feuerfestes, rotierbares Gefäß. Weitere Ausführungsformen umfassen beispielsweise einen Top Blown Rotary Converter (TBRC) oder Kurztrommelofen (KTO), die Brenner- und Abgasseite vereinen, oder ein Wälzrohr, dass die Befeuerung und den Abzug des Abgases gegenüberliegend trennt.

Nach der Bereitstellung erfolgt Aufbereiten mittels der Heizvorrichtung, beispielsweise in der Heizvorrichtung. Das Aufbereiten weist ein Aufheizen des Industriestaubs auf, welches mittels der Heizvorrichtung, beispielsweise in der Heizvorrichtung, erfolgen kann. Es erfolgt mit einer Rate von zumindest 20° C/min, bevorzugt 30° C/min, besonders bevorzugt zumindest 50° C/min, besonders bevorzugt zumindest 100° C/min, ganz besonders bevorzugt zumindest 150° C/min. Dieses Aufheizen ist extrem schnell, die Anstiegsrate beim Aufheizen wird möglichst hoch gewählt. Erfindungsgemäß umfasst das Aufbereiten thermisches Behandeln mittels der Heizvorrichtung (beispielsweise in der Heizvorrichtung) mit einer Behandlungstemperatur in einem Temperaturbereich 900° C bis 1200° C (bevorzugt 1000° C bis 1100° C) für zumindest 30 Minuten (bevorzugt zumindest 60 Minuten, besonders bevorzugt zumindest 120 Minuten, ganz besonders bevorzugt 150 Minuten).

Während des Aufbereitens werden oxidierende Bedingungen eingestellt. Der Industriestaub ist beim Aufbereiten also oxidierenden Bedingungen ausgesetzt. Die Einstellung der oxidierenden Bedingungen erfolgt bevorzugterweise gezielt. Die oxidierenden Bedingungen können gesteuert und/oder geregelt werden. Es wird also eingestellt, dass keine reduzierenden Bedingungen vorliegen, und es wird gegebenenfalls geregelt und/oder gesteuert, wie die oxidierenden Bedingungen, gegebenenfalls in der Heizvorrichtung, ausgeprägt sind. Das kann beispielsweise mittels Steuerns und/oder Regelns der Zufuhr von Oxidationsmittel (wie beispielsweise Luft und/oder Sauerstoff) erfolgen, beziehungsweise mittels Steuerns und/oder Regelns der Zufuhr von Luft und/oder Sauerstoff zu als Heizquellen dienenden Brennern (zusätzlich oder alternativ kann auch eine elektrische Heizvorrichtung gewählt werden).

Im Rahmen dieses Dokuments bezeichnet der Begriff "Wertstoff-Produkt" ein Produkt, welches aus dem oben beschriebenen Industriestaub durch Anwendung der erfindungsgemäßen Verfahrensschritte erhalten wird. Das Wertstoff-Produkt kann als Staub vorliegen, bevorzugt kann das Werkstoff Produkt aber auch als Agglomerat von Staubpartikeln vorliegen. Das Wertstoff-Produkt ist durch das Vorliegen von zumindest einem Wertstoff gekennzeichnet, welcher beispielsweise ein Metalloxid wie beispielsweise Zinkoxid oder Kupferoxid sein kann. Das Wertstoff-Produkt ist dadurch gekennzeichnet, dass, im Vergleich zu dem Industriestaub, die Konzentration an Verunreinigungen deutlich reduziert ist. Insbesondere kann der Anteil an Halogenen und/oder unerwünschten Metallen deutlich verringert sein. In einem bevorzugten Beispiel kann die Konzentration des Wertstoffs in dem Wertstoff-Produkt im Vergleich zu dem zugeführten Industriestaub erhöht sein.

Die Verunreinigungen können flüchtige Bestandteile des Industriestaubes sein. Im Rahmen dieses Dokuments kann der Begriff "flüchtige Bestandteile" insbesondere Bestandteile eines Industriestaubes bezeichnen, welche bei Vorliegen einer bestimmten Temperatur (gegebenenfalls nach einer oder mehreren chemischen Reaktionen) durch Verdampfen in die Gasphase übergehen. Die bestimmte Temperatur kann in einem Beispiel derart definiert werden, dass sie unter der Schmelztemperatur des Industriestaubes liegt. In einem weiteren Beispiel kann die bestimmte Temperatur beispielsweise unter 1500° C liegen. Flüchtige Bestandteile können beispielsweise Halogenverbindungen von Chlor oder Fluor sein; beispielsweise ist Bleifluorid bei 1293° C flüchtig oder Bleichlorid ist flüchtig bei 950° C.

Gemäß einem exemplarischen Ausführungsbeispiel kann die Erfindung auf der Idee basieren, dass das (zumindest teilweise) Entfernen von flüchtigen Bestandteilen aus einem Wertstoff-haltigen Industriestaub auf effiziente und robuste Weise ermöglicht ist, wenn in einer Heizvorrichtung ein spezifischer Aufbereitungsprozess durchgeführt wird, welcher zumindest die folgenden Schritte aufweist:

- Einbringen des Industriestaubes bei 600° C oder darüber,
- Aufheizen mit einer Rate von (zumindest) 20° C/min oder mehr, und
- thermisches Behandeln in dem Bereich 900° C bis 1200° C für (zumindest) 30 min, wobei die oxidierenden Bedingungen gesteuert und/oder geregelt werden.

Im Stand der Technik wurden bereits zahlreiche Versuche unternommen, Verunreinigungen wie beispielsweise unerwünschte flüchtige Bestandteile aus Industriestäuben - wobei die flüchtigen Bestandteile den Wert der Industriestäube deutlich herabsetzen beziehungsweise diese unbrauchbar machen - selektiv zu verflüchtigen. Diese Versuche waren jedoch allesamt nicht erfolgreich. Derzeit ist kein thermisches Verfahren bekannt, welches ein effizientes und robustes und dabei wirtschaftliches Entfernen der flüchtigen Bestandteile aus Industriestäuben ermöglicht.

Es wurde nun aber im Zuge umfangreicher und intensiver Studien überraschend entdeckt, dass mittels des erfindungsgemäßen Verfahrens das technische Vorurteil überwunden werden kann, dass flüchtige Bestandteile aus Industriestäuben nicht auf effiziente und robuste Weise entfernt werden können.

Für einen erfolgreichen Verlauf und die damit einhergehenden maximalen erzielbaren Extraktionsraten von Verunreinigungen, insbesondere flüchtigen Bestandteilen aus dem Industriestaub ist die Temperaturführung in den ersten Minuten aber auch die weitere thermische Behandlung von entscheidender Bedeutung. Damit kann gewährleistet werden, dass Verunreinigungen, insbesondere flüchtigen Bestandteilen, keine Zeit gegeben wird, mit anderen im Industriestaub enthaltenen Verbindungen zu nichtflüchtigen Verbindungen zu reagieren. Die Bildung neuer Verbindungen, welche unter den angegebenen Prozesstemperaturen nicht flüchtig sind, wird damit effizient gehemmt beziehungsweise unterbunden.

Ohne an eine bestimmte Theorie gebunden sein zu wollen, wird derzeit davon ausgegangen, dass es bei konventionellen Temperaturverläufen - über chemische Reaktionen zwischen den flüchtigen Bestandteilen - stets zur Bildung von nicht-flüchtigen Bestandteilen kommt. Beispielsweise kann Calciumfluorid gebildet werden, welches einen hohen Siedepunkt von 2533° C aufweist. Im Gegensatz hierzu unterbinden die erfindungsgemäßen Bedingungen aber chemische Reaktionen zu nicht-flüchtigen Bestandteilen, und fördern stattdessen chemische Reaktionen zu flüchtigen Bestandteilen; beispielsweise eine Reaktion von Calciumfluorid mit Bleioxid zu Bleifluorid, welches lediglich einen Siedepunkt von 1293° C aufweist. Auf dieselbe Weise scheint lediglich die genaue Anwendung der erfindungsgemäßen Bedingungen dafür zu sorgen, dass die flüchtigen Bestandteile zu weiteren flüchtigen Bestandteilen und nur in geringem Ausmaß oder nicht zu nichtflüchtigen Bestandteilen reagieren.

Das beschriebene Verfahren ermöglicht zusätzlich ein umweltschonendes Recycling von Industriestäuben zu Wertstoffen, während diese Industriestäube konventionell aufwendig und wenig umweltfreundlich aufbereitet werden oder gleich kosten-intensiv entsorgt werden mussten.

Der gewonnene Wertstoff, beispielsweise Zinkoxid, kann als Substitut primärer Erzkonzentrate dienen und flexible Einsatzmöglichkeiten bieten. Im Falle von hochreinem Zinkoxid kann ein direkter Einsatz in wirtschaftlich relevanten Märkten für hochqualitatives Zinkoxid - beispielsweise in der Reifenindustrie, für die Keramik-Herstellung, in der chemische Industrie - ermöglicht sein.

Zusammengefasst kann das beschriebene Verfahren als effizienter, energieoptimierter und auch ressourcensparender als bisherige Verfahren bezeichnet werden, und stellt somit eine umweltfreundlichere Alternative dar.

Gemäß einem Ausführungsbeispiel weisen die Verunreinigungen flüchtige Bestandteile auf. Gemäß einem Ausführungsbeispiel umfassen die flüchtigen Bestandteile Halogen, insbesondere Fluor und/oder Chlor, in erster Linie in Verbindungen, nicht elementar. Zusätzlich oder alternativ umfassen die flüchtigen Bestandteile ein Metall, das unerwünscht beziehungsweise wirtschaftlich nicht relevant ist, insbesondere ein Metall in Verbindungen und nicht elementar, weiter insbesondere ein Metall der Gruppe, welche besteht aus Blei, Cadmium, Natrium, Kalium, Calcium. Dies kann den Vorteil haben, dass unerwünschte Bestandteile, welche den Wert des Industriestaubes deutlich reduzieren, gezielt entfernt werden können.

Gemäß einem weiteren Ausführungsbeispiel umfasst der Wertstoff ein Metalloxid (insbesondere Zinkoxid und/oder Kupferoxid). Dies kann den Vorteil haben, dass ein Industriestaub-Abfallstoff zu einem Rohstofflager für Industrie-relevante Materialien werden kann. Industriestäube, insbesondere solche aus der Metallerzeugung oder Metallverarbeitung, weisen Prozess-inhärent eine Vielzahl von Metallen beziehungsweise Metallverbindungen wie Metalloxide auf, welche interessante Wertstoffe, beispielsweise für die Produktion von sekundären/hochreinen Metallen beziehungsweise Metallverbindungen wie Metalloxiden darstellen können.

Gemäß einem weiteren Ausführungsbeispiel liegt der Industriestaub, zumindest im Wesentlichen, in Form von Staubpartikeln vor, insbesondere in Form von Staubpartikeln, die aus der Metallerzeugung oder Metallverarbeitung stammen.

Gemäß einem weiteren Ausführungsbeispiel umfassen die Staubpartikel Stahlwerkstaub ("steel mill dust") oder Staub aus der Kupferindustrie. Insbesondere zumindest einen Staub aus der Gruppe, welche besteht aus: Elektrolichtbogenofenstaub ("electric arc furnace dust", EAFD), Staub aus einem Gießereibetrieb, Staub aus integrierten Stahlherstellungsrouten, Staub aus einem Sinterbetrieb. Dies kann den Vorteil bereitstellen, dass Staubpartikel aus verschiedenen industriell relevanten Produktionsprozessen effizient aufbereitet werden können.

Gemäß einem weiteren Ausführungsbeispiel umfasst das Bereitstellen des Industriestaubs: Agglomerieren der Staubpartikel des Industriestaubs. Dadurch kann das erfindungsgemäße Verfahren noch effizienter durchgeführt werden, weil eine Verstaubung weitgehend unterbunden werden kann. Ein Agglomerieren der Staubpartikel kann in einem Beispiel als Pelletieren (beispielsweise mittels Pelletier-Teller) durchgeführt werden. In einem anderen Beispiel kann das Agglomerieren mittels Zuhilfenahme eines Zwangsmischers ermöglicht sein. Als Zusatzstoff für die benötigte Grünfestigkeit der Agglomerate kann Wasser ausreichend sein. Beispielsweise können die bereits vorhandenen Halogene in Verbindung mit Wasser für die nötigen Bindungskräfte sorgen.

Gemäß einem weiteren Ausführungsbeispiel wird das erfindungsgemäße Verfahren diskontinuierlich beziehungsweise Batch-weise (insbesondere mittels Chargen von agglomeriertem Industriestaub) durchgeführt. Dies kann den Vorteil haben, dass das erforderliche thermische Behandeln gezielt und auf robuste Weise erfolgt.

Während konventionell davon ausgegangen wird, dass Verfahren zur Herstellung von Wertstoff-Produkten stets kontinuierlich durchgeführt werden müssen, um eine erwünschte Wirtschaftlichkeit zu erreichen, hat es sich im vorliegenden Fall überraschend herausgestellt, dass das genaue Gegenteil, nämlich der diskontinuierliche Prozess, zu den erwünschten Ergebnissen führen kann. In einem bevorzugten Beispiel wird der Industriestaub agglomeriert, so dass die Agglomerate als Chargen dem Aufbereiten zugeführt werden können. Das erfindungsgemäße Verfahren zur Herstellung von Wertstoff-Produkten kann dann Batch-weise betrieben werden, um sicherzustellen, dass die erwünschten und erforderlichen Bedingungen für jedes Batch erfüllt werden.

Gemäß einem weiteren Ausführungsbeispiel umfasst das Bereitstellen des Industriestaubes: Trocknen des, insbesondere agglomerierten, Industriestaubes. Dadurch kann das Verfahren noch effizienter durchgeführt werden, weil ein Platzen aufgrund zu raschen Entweichens von Wasserdampf vermieden wird. Die Trocknungstemperatur liegt in einem Beispiel im Bereich von 105 bis 350° C, insbesondere bei 200 bis 300° C. Die Dauer der erforderlichen Trocknung liegt in einem Beispiel bei 24 bis 72 Stunden, insbesondere bei 40 bis 60 Stunden.

Gemäß einem weiteren Ausführungsbeispiel umfasst das thermische Behandeln: Steuern und/oder Regeln des Wasserdampfs in der beheizten Atmosphäre derart, dass ein Wasserdampf Partialdruck von zumindest 0,1 bar vorliegt. Der Partialdruck kann den Teildruck einer einzelnen Komponente oder Fraktion in einem (idealen) Gasgemisch bezeichnen. Steuern und/oder Regeln erfolgt dabei beispielsweise über die Feuchtigkeit des Industriestaubes, oder bei Verwendung von Brennern über die Art der den Brennern zugespeisten Substanzen wie Brennstoffe, Oxidationsmittel, beziehungsweise deren Mengenverhältnisse. Die Steuerung und/oder Regelung des Wasserdampfs in der beheizten Atmosphäre kann auch über Steuerung und/oder Regelung von Druckbedingungen, und/oder von Temperaturbedingungen, und/oder von Volumenbedingungen im Heizgefäß erfolgen.

Gemäß einem weiteren Ausführungsbeispiel umfasst das thermische Behandeln: Durchmischen des Industriestaubes. Dies kann insbesondere mittels (zumindest zeitweisem) Rotieren zumindest eines Teiles der mit dem Industriestaub befüllten Heizvorrichtung erreicht werden. Dies kann den Vorteil haben, dass eine ständige Durchmischung und eine Erhöhung der aktiven Oberfläche des Materials ermöglicht ist, und damit eine homogene Behandlung gewährleistet ist. Die Drehzahl kann sich in einem Beispiel im Bereich von 1-10 U/min, insbesondere 2-3 U/min, bewegen.

Gemäß einem weiteren Ausführungsbeispiel weist die Einstellung oxidierender Bedingungen das Steuern und/oder Regeln der oxidierenden Bedingungen auf: Zuführen eines Oxidationsmittels (insbesondere Sauerstoff und/oder Luft) zu einem Brennstoff derart, dass das Verbrennungsluftverhältnis überstöchiometrisch ist, insbesondere in dem Bereich 1,1 bis 1,5 (weiter insbesondere in dem Bereich 1,3 bis 1,4) ist, wobei die Grenzwerte der Bereiche mit umfasst sind. Dies kann den Vorteil haben, dass effiziente oxidierende Bedingungen vorliegen, welche gezielt steuerbar beziehungsweise regelbar sind.

Gemäß einem weiteren Ausführungsbeispiel weist der Industriestaub eine erste Konzentration eines Wertstoffs auf, und das Aufbereiten umfasst: Aufkonzentrieren des Wertstoffs derart, dass das Wertstoff-Produkt eine zweite Konzentration des Wertstoffs aufweist, welche größer ist als die erste Konzentration. Dies hat den Vorteil, dass der Wertstoff in dem Wertstoff-Produkt aufkonzentriert ist. Dadurch kann dieses zu einem noch wertvolleren Rohstoff werden.

Gemäß einem weiteren Ausführungsbeispiel umfasst das erfindungsgemäße Verfahren (insbesondere während des Aufheizens und/oder während des thermische Behandelns): (zumindest teilweises) Hemmen einer chemischen Reaktion eines Halogens und/oder eines Metalls zu einem nicht-flüchtigen Bestandteil (beispielsweise Calciumfluorid). Zusätzlich oder alternativ: Fördern einer chemischen Reaktion eines Halogens und/oder eines Metalls zu einem flüchtigen Bestandteil (beispielsweise Bleifluorid). Dies kann den Vorteil bereitstellen, dass als Verunreinigungen im Wesentlichen nur flüchtige Bestandteile vorliegen, beziehungsweise keine neuen nichtflüchtigen Substanzen entstehen, wodurch ein Verdampfen dieser Verunreinigungen, beziehungsweise neu entstehender Substanzen, ohne nicht-flüchtige Reste ermöglicht ist.

Gemäß einem weiteren Ausführungsbeispiel weist das Verfahren zumindest eines der folgenden Merkmale auf:

i) Entfernen von zumindest 90%, insbesondere zumindest 95 %, des Gehalts zumindest eines Mitglieds der Gruppe bestehend aus Chlor, Blei, Cadmium, aus dem Industriestaub,
ii) Entfernen von zumindest 80 %, insbesondere zumindest 85 %, des Gehalts zumindest eines Mitglieds der Gruppe bestehend aus Fluor und Kalium, aus dem Industriestaub,
iii) Entfernen von 45 % (insbesondere 50 %) oder mehr Natrium aus dem Industriestaub.

Diese Merkmale reflektieren in einem Beispiel die Effizienz des Entfernens von Verunreinigungen, insbesondere flüchtigen Bestandteilen, und zeigen, wie der Wert eines Industriestaubes ohne hohen Kostenaufwand deutlich erhöht werden kann.

Gemäß einem weiteren Ausführungsbeispiel wird das Aufheizen des Industriestaubes mit einer Rate von zumindest 30° C/min, bevorzugt zumindest 50° C/min, besonders bevorzugt zumindest 100° C, ganz besonders bevorzugt zumindest 150° C, durchgeführt. In exemplarischen Ausführungsbeispielen haben sich diese Parameter als besonders effizient herausgestellt.

Gemäß einem weiteren Ausführungsbeispiel wird das thermische Behandeln des Industriestaubes in der Heizvorrichtung für zumindest 30 Minuten, bevorzugt zumindest 60 Minuten, besonders bevorzugt zumindest 120 Minuten, ganz besonders bevorzugt für zumindest 180 Minuten, durchgeführt. In exemplarischen Ausführungsbeispielen haben sich diese Parameter als besonders effizient herausgestellt.

Gemäß einem weiteren Aspekt der Erfindung wird ein Verfahren zum Bereitstellen von Metalloxid, insbesondere Zinkoxid und/oder Kupferoxid, beschrieben, das Verfahren aufweisend: i) Herstellen eines Wertstoff-Produkts gemäß einem erfindungsgemäßen Verfahren und/oder Verwenden eines entsprechenden hergestellten Wertstoff-Produkts, und ii) weiteres Aufbereiten des Wertstoff-Produkts, um ein hochreines Metalloxid und/oder ein sekundäres Metalloxid bereitzustellen.

Gemäß einem weiteren Ausführungsbeispiel erfolgt weiteres Aufbereiten des Wertstoff-Produkts Elektrolysefrei. Dies kann den Vorteil haben, dass Energie und Kosten eingespart werden können.

Gemäß einem weiteren Aspekt der Erfindung wird ein aufbereitetes Wertstoff-Produkt beschrieben, welches aus Industriestaub hergestellt ist und welches aufweist: i) Zinkoxid (insbesondere zumindest 10 Gewichtsprozent, weiter insbesondere zumindest 20 Gewichtsprozent, weiter insbesondere zumindest 25 Gewichtsprozent, weiter insbesondere zumindest 30 Gewichtsprozent, Zinkoxid), und zumindest eines der folgenden Merkmale: a) eine Fluor-Konzentration von 0,2 Gewichtsprozent oder weniger, b) eine Halogen-Konzentration von 2 Gewichtsprozent oder weniger, c) eine Blei-Konzentration von 1 Gewichtsprozent oder weniger, d) eine Cadmium-Konzentration von 0,05 Gewichtsprozent oder weniger, e) eine Konzentration flüchtiger Bestandteile von 5 Gewichtsprozent oder weniger.

Gemäß einem weiteren Ausführungsbeispiel weist das aufbereitete Wertstoff-Produkt Staubpartikel auf, welche (im Wesentlichen) agglomeriert vorliegen. Dieses Merkmal kann den Herstellungsprozess reflektieren, in welchem die Staubpartikel (beispielsweise zu Pellets) agglomeriert wurden. Diese hat den Vorteil, dass ein (übermäßiges) Verstauben mit Vorteil unterbunden wurde. Zudem kann Staubvertragung, beispielsweise mittels Luftströmungen, vorteilhaft verhindert werden.

Gemäß einem weiteren Ausführungsbeispiel weist das Wertstoff-Produkt Staubpartikel auf, welche (im Wesentlichen) agglomeriert vorliegen.

Detaillierte Beschreibung exemplarischer Ausführungsbeispiele

Im Folgenden werden einige exemplarische Ausführungsbeispiele der vorliegenden Erfindung detailliert beschrieben.

Gemäß einem exemplarischen Ausführungsbeispiel wird ein Verfahren beschrieben zur selektiven Entfernung von Halogenen und anderen flüchtigen Bestandteilen aus Stahlwerksstäuben durch gezielte thermische Behandlung unter kontrollierten oxidierenden Bedingungen, einem durch solch ein Verfahren erhältlichen, zu großen Teilen von schädlichen Begleitelementen und Verbindungen befreitem, Stahlwerksstaub und dessen Verwendung zur Herstellung von hochreinem sekundären Zinkoxid.

Gemäß einem exemplarischen Ausführungsbeispiel kann ein Bedarf bestehen, mit flüchtigen Bestandteilen (wie Halogen- und Blei-Verbindungen oder Blei) belastete Stahlwerksstäube so aufzubereiten, dass ein Großteil der Halogenverbindungen sowie andere flüchtige Bestandteile entfernt werden, damit aus den Stäuben ein Zinkoxid gewonnen werden kann, welches der primären Zinkindustrie, in Bezug auf die Substitution primärer Erzkonzentrate, mehr Einsatzmöglichkeiten bietet, oder im Falle von hochreinem produzierten Zinkoxid einen direkten Einsatz im wirtschaftlich attraktiven Markt für hochqualitatives Zinkoxid (Reifenindustrie, Keramik, chemische Industrie, etc.) ermöglicht. Dies würde in weiterer Folge auch zu einem hohen Einsparungspotenzial hinsichtlich Energie aufgrund des Wegfalls der Zinkgewinnungselektrolyse (Teil des primären Prozesses) führen.

Gemäß einem exemplarischen Ausführungsbeispiel ist es die Aufgabe der vorliegenden Erfindung, ein Verfahren bereitzustellen, mit dem ein Zinkoxidhaltiger Stahlwerksstaub, wie er zum Beispiel beim Schmelzen von Stahlschrott im Elektrolichtbogenofen auftritt, von Halogenverbindungen und anderen flüchtigen Bestandteilen befreit wird. Damit ist sichergestellt, dass derartig behandelte Stahlwerksstäube Ausgangspunkt für die Produktion von hochreinem sekundären Zinkoxid sind. Damit kann entweder der Anteil an anfallendem Eisenrückstand, selbst bei Erhöhung der Einsatzmenge sekundärer Zinkoxide im Vergleich zu Erzkonzentraten, in der primären Zinkherstellung drastisch reduziert werden beziehungsweise wird alternativ die Wertschöpfung beim Aufarbeiten von Stahlwerksstaub signifikant erhöht. Dies passiert indem das Recycling-Produkt Zinkoxid zu deutlich höheren Preisen in den Markt für hochqualitatives Zinkoxid verkauft werden kann. Wird durch das neue Verfahren die Produktqualität erhöht, so ist das neue Verfahren effizienter, energieoptimierter und auch ressourcensparender als bisherige Verfahren und stellt somit eine umweltfreundlichere Alternative dar.

Gemäß einem exemplarischen Ausführungsbeispiel umfasst das Verfahren die folgenden Schritte: i) Agglomeration des Industriestaubes, ii) Trocknung, iii) gezielte thermische Behandlung unter kontrollierten oxidierenden Bedingungen. Am Ende der Behandlung ergibt sich eine Chlor-, Blei- und Cadmiumentfernung von > 90 %, eine Fluorentfernung von > 80 % und eine wesentliche Verminderung (z.B. zumindest 50%) des Kalium- und Natriumgehaltes aus dem Stahlwerksstaub (bzw. dem bereitgestellten Industriestaub). Ein zentraler Aspekt dabei ist, dass aufgrund der oxidierenden Bedingungen das im Stahlwerksstaub enthaltene Zinkoxid nahezu vollständig im festen Material verbleibt, in dem sich einhergehend, durch die Entfernung der Verunreinigungen, die Konzentration an Wertmetall erhöht. Damit kann der, zum überwiegenden Teil von Halogenverbindungen und anderen flüchtigen Verbindungen bereinigte, Stahlwerksstaub als Ausgangsprodukt für die Herstellung von qualitativ höherwertigem sekundären Zinkoxid in den üblichen Recyclingprozessen oder aber für die Herstellung von qualitativ höchstwertigem Zinkoxid in einem, auf diesen gegenständlich beschriebenen thermischen Behandlungsschritt abgestimmten, folgenden reduzierenden Verfahrensschritt verwendet werden.

Gemäß einem exemplarischen Ausführungsbeispiel können folgende Vorteile erreicht werden: i) die Produktqualität des Wertstoffs (insbesondere Zinkoxid) wird erhöht, ii) die Anwendungsgebiete des produzierten Wertstoffs umfassen sowohl die primäre Metallurgie als auch hochqualitative Metalle, iii) der Anteil an Fällungsrückstand in der primären Metallherstellung kann reduziert werden, iv) mittels gezielter Abgasführung und Kühlung kann die Prozessanlage vor erhöhter Korrosion (durch die erhöhte Halogenbelastung) geschützt werden, v) der abgeschiedene, konzentrierte Halogenrückstand kann wiederum als Rohstoff für entsprechende (industrielle) Verwendungen (Weiterverarbeitung in der chemischen Industrie, z.B. Gewinnung von Blei-Verbindungen mittels Bleichlorid) genutzt werden, vi) der Energieverbrauch kann durch eine Heißchargierung in einen direkt nachfolgenden Reduktionsschritt zur Metalloxid Gewinnung gering gehalten werden, vii) der beschriebene Prozess lässt sich auch in Kleinanlagen (z. B. Produktion von 10.000 Tonnen/Jahr) durchführen, während der Einsatz des Wälzrohres aus dem Stand der Technik ausschließlich bei einer Mindesttonnage von etwa 100.000 Tonnen/Jahr ermöglicht ist.

Im Folgenden werden zwei exemplarische Ausführungsbeispiele der Erfindung im Detail beschrieben.

**Ausführungsbeispiel 1**

In einem (ersten) Verfahrensschritt wird eine Agglomeration durchgeführt, um übermäßige Verstaubung in der Folge zu verhindern. Dabei ist sowohl ein Pelletieren mittels Pelletierteller als auch eine Agglomeration unter Zuhilfenahme eines Zwangsmischers möglich. Als Zusatzstoff für die benötigte Grünfestigkeit der Agglomerate ist Wasser ausreichend. Die im Stahlwerksstaub enthaltenen Halogenverbindungen sorgen in Verbindung mit Wasser für die nötigen Bindungskräfte. Der bereitgestellte Stahlwerksstaub enthält Halogenverbindungen mit Chlor und Fluor sowie anderen flüchtigen Bestandteilen mit Blei und Cadmium. Beim Staub handelt es sich insbesondere um Elektrolichtbogenofenstaub (EAFD) aber auch ähnliche Reststoffe, wie beispielsweise Stäube aus Gießereibetrieben, Stäube aus der integrierten Stahlherstellungsrouten einschließlich Sekundärmetallurgie, Stäube aus dem Sinterbetrieb und Stäube der Kupferindustrie.

Typische Zusammensetzungen von hoch zinkhaltigen Stahlwerksstäuben aus der Elektrolichtbogenofenroute sind in nachfolgender Tabelle 1 zusammengefasst.

Tabelle 1: Typische Zusammensetzungen von hoch zinkhaltigen Stahlwerksstäuben

| Gew.-% | Stahlwerksstaub |
|---|---|
| Zn | 15,0-40,0 |
| Pb | 2,0-6,0 |
| Cl | 0,1-5,0 |
| F | 0,1-1,5 |
| Cd | 0,01-0,3 |
| Fe | 15,0-35,0 |
| CaO | 3,5-15,0 |
| MgO | 1,5-9,0 |
| SiO$_2$ | 1,0-8,0 |

In einem weiteren Verfahrensschritt werden die Staubagglomerate einer gründlichen Trocknung unterzogen, um ein späteres Platzen aufgrund zu raschen Entweichens der Wasserdämpfe zu vermeiden. Die Trocknungstemperatur liegt dabei im Bereich von 105 bis 350° C (insbesondere bei 200 bis 300° C). Die Dauer der erforderlichen Trocknung liegt bei 24 bis 72 Stunden, in der Regel bei 40 bis 60 Sunden, jedoch bis zum Erreichen der Gewichtskonstanten.

In einem weiteren Verfahrensschritt werden die produzierten Staubagglomerate in eine Heizvorrichtung (beispielsweise ein metallurgisches Behandlungsaggregat) chargiert und einer gezielten thermischen Behandlung unter kontrollierten oxidierenden Bedingungen zur selektiven Verflüchtigung der flüchtigen Bestandteile unterzogen. Als Heizvorrichtung dient ein feuerfest ausgemauertes, rotierendes Gefäß. Die Position der Befeuerung sowie die Abgasführung spielt dabei eine untergeordnete Rolle. Eine Ausführung als Top Blown Rotary Converter (TBRC) oder Kurztrommelofen (KTO), die Brenner- und Abgasseite vereinen können, ist ebenso denkbar wie ein Wälzrohr, dass die Befeuerung und den Abzug des Abgases gegenüberliegend trennt. Die Prozesstemperaturen liegen zwischen 900 und 1200°C (insbesondere zwischen 1000 und 1100°C). Bei der erforderlichen Entfernung eines Großteiles der Halogenverbindungen und anderer flüchtiger Bestandteile aus dem Stahlwerksstaub kann die Behandlungsdauer zwischen 2 und 3 Stunden (bevorzugt 1,5 Stunden) betragen.

Durch die rotierende Bewegung des Gefäßes ist für eine ständige Durchmischung und eine Erhöhung der aktiven Oberfläche des aufgegebenen Materials gesorgt, und damit eine homogene Behandlung der Agglomerate gewährleistet. Die Drehzahl kann sich dabei im Bereich von 1-10 U/min (insbesondere 2-3 U/min) bewegen.

Die Befeuerung erfolgt mittels Brenner, der entweder reinen Sauerstoff oder Luft für die Verbrennung des Gases nutzt. Die kontrollierten oxidierenden Bedingungen werden durch eine gesteuerte und/oder geregelte Zufuhr von Sauerstoff/Luft erreicht. Das Verbrennungsluftverhältnis λ liegt dabei je nach vorliegender Staubzusammensetzung zwischen 1,1 und 1,5 (insbesondere zwischen 1,3 und 1,4).

In der Aufheizphase ist bevorzugt eine Heizrate von 150°C/min (zu jedem Zeitpunkt) vorgesehen. Damit wird gewährleistet, dass den Halogenverbindungen und anderen flüchtigen Bestandteilen im Stahlwerksstaub keine Zeit gegeben wird mit anderen Verbindungen im Aufgabegut (insbesondere zu nichtflüchtigen Bestandteilen) zu reagieren. Die Bildung möglicher Verbindungen, die unter den angegebenen Prozesstemperaturen nicht flüchtig sind, wird damit effektiv verhindert. Wird der beschriebenen Temperaturführung (insbesondere auch der beschriebenen Atmosphärenzusammensetzung) in dieser Phase der Behandlungszeit nicht Folge geleistet, ist eine effiziente Entfernung der Halogene und anderen flüchtigen Bestandteilen nicht möglich.

Als Beispiel hierfür kann eine mögliche Bildung von Calciumfluorid oder auch Calciumchlorid genannt werden, welche bei einer anderen als beschriebenen (insbesondere zu langsamen) Aufheizgeschwindigkeit auftritt. Während Fluor in Verbindung mit Natrium, Kalium oder Blei unter den vorherrschenden Bedingungen zur Verflüchtigung neigt, ist die Entfernung durch Verdampfung von Calciumfluorid ausgeschlossen. Die Fluor-Gehalte, die bei einem solchen Szenario im behandelten Stahlwerksstaub verbleiben, führen zu einer Minderung der erzielbaren Qualität des erzeugten Produktes eines solchen Prozessschrittes. Bei den vorherrschenden Temperaturen von 900 bis 1200° C (insbesondere 1000 bis 1100° C) beginnt die Verflüchtigung der im Staub enthaltenen flüchtigen Verbindungen aus dem Industriestaub, im Speziellen aber nicht ausschließlich der vorliegenden Halogenverbindungen, sofort.

In der ersten Phase des Prozesses erfolgt damit eine Reduktion der Konzentration der Elemente Cadmium, Blei und Chlor aber auch die Natrium-, Kalium- und Fluorgehalte verringern sich, ohne eine signifikante Umformierung der vorliegenden Fluorverbindungen zum nicht flüchtigen Calciumfluorid. Neben Cadmiumoxid verdampft das Blei, teilweise als Bleioxid, aber auch als Bleichlorid, sowie potenziell formiertes Bleifluorid, durch die Reaktion von gasförmigem Bleioxid mit anderen Fluoriden.

Einhergehend mit der raschen Aufheizgeschwindigkeit findet ein zusätzlicher Prozess statt, durch den das Fluorausbringen abermals gesteigert werden kann. Potenziell bereits vorhandenes Calciumfluorid kann mit gasförmigem Bleioxid wieder zu Bleifluorid und Calciumoxid reagieren, wodurch eine effiziente Verflüchtigung möglich ist. Dies geschieht jedoch nur bei schnellen Aufheizraten und eingestellten/kontrollierten Atmosphärenbedingungen im Reaktionsgefäß, wodurch ein vorzeitiges Abdampfen des Bleioxides verhindert wird. In anderen Worten gilt es zu verhindern, dass ein entscheidendes Reaktionsedukt, im thermischen Reaktionsfenster nachfolgender Gleichung, fehlen würde.

$$CaF_{2(s)} + PbO_{(g)} = PbF_{2(g)} + CaO_{(s)}$$

Die sinkenden Natrium- und Kalium- sowie Chlor- und Fluor-Gehalte sind hauptsächlich auf die weitere Verdampfung der im Stahlwerksstaub vorliegenden Halogenverbindungen mit Blei, Natrium und Kalium zurückzuführen. In der zweiten Phase der Behandlung erfolgt eine stetige, aber verlangsamte Verflüchtigung der Verbindungen (z. B. Filterhaus) mit niedrigerem Dampfdruck, wie beispielsweise Natrium und Kalium mit Fluor.

Am Ende der Behandlung ergibt sich eine Chlor-, Blei- und Cadmiumentfernung von > 90 %, eine Fluorentfernung von > 80 % und eine wesentliche Verminderung (z. B. über 50 %) des Kalium- und Natrium-Gehaltes im Stahlwerksstaub in Bezug zu dem ursprünglichen Industriestaub.

Essenziell dabei ist auch, dass aufgrund der oxidierenden Bedingungen, das im Stahlwerksstaub enthaltene Zinkoxid nahezu vollständig im festen Material verbleibt, in dem sich einhergehend die Konzentration an Wertmetall erhöht.

Damit kann der zum überwiegenden Teil von Halogenen entfernte Stahlwerksstaub als Ausgangsprodukt für die Herstellung von sekundärem Zinkoxid in den üblichen Recyclingprozessen oder aber auch für die Herstellung von qualitativ hochwertigem Zinkoxid in einem neu entwickelten, auf diesen vorgeschalteten Schritt abgestimmten, Verfahrensschritt verwendet werden.

**Ausführungsbeispiel 2**

Als Ausgangspunkt dient ein Stahlwerksstaub aus dem Betrieb eines Elektrolichtbogenofens zur Herstellung von Baustahl mit 100 % Schrotteinsatz und ein Stahlwerksstaub aus dem Betrieb eines LD-Konverters mit etwa 20 % Schrotteinsatz. Nach dem im Folgenden beschriebenen Behandlungs- und Messschema wurden 2 Versuche durchgeführt. Ein Versuch erfolgte mit dem Elektrolichtbogenofenstaub alleine und der zweite mit einem Mischstaub (80 % Elektrolichtbogenofenstaub + 20 % LD-Staub). Die nachstehenden Tabellen 2 und 3 zeigen die Zusammensetzung der für den Versuch verwendeten Stäube.

Tabelle 2: Zusammensetzung des für die Entfernung von Halogenen und anderen flüchtigen Bestandteilen eingesetzten Elektrolichtbogenofenstaubes

| Elektrolichtbogenofenstaub | | | |
|---|---|---|---|
| Bestandteil | Gehalt [Gew.-%] | Bestandteil | Gehalt [Gew.-%] |
| F | 0,49 | Mg | 0,89 |
| Cl | 5,20 | Mn | 1,20 |
| Na | 2,20 | Si | 1,10 |
| K | 1,70 | Al | 0,75 |
| Fe | 15,50 | Zn | 35,20 |
| Ca | 2,10 | Pb | 2,80 |
| Cr | 0,24 | Ni | 0,02 |
| Cu | 0,32 | Cd | 0,12 |

Tabelle 3: Zusammensetzung des für die Entfernung von Halogenen und anderen flüchtigen Bestandteilen eingesetzten Mischstaubes

| Mischstaub (80 % Elektrolichtbogenofenstaub + 20 % LD-Staub) | | | |
|---|---|---|---|
| Bestandteil | Gehalt [Gew.-%] | Bestandteil | Gehalt [Gew.-%] |
| F | 0,40 | Mg | 1,98 |
| Cl | 4,25 | Mn | 0,99 |
| Na | 1,80 | Si | 1,55 |
| K | 2,45 | Al | 0,63 |
| Fe | 19,40 | Zn | 30,5 |
| Ca | 2,38 | Pb | 2,90 |
| Cr | 0,23 | Ni | 0,21 |
| Cu | 0,63 | Cd | 0,10 |

Die Stäube wurden mithilfe eines Pelletier-Tellers agglomeriert. Als Zusatzstoff zur Erreichung der Grünfestigkeit für die Agglomeration erfolgte eine Beimischung von Wasser. Die hohen Gehalte an Halogenen sorgen in Verbindung mit Wasser für die nötigen Bindungskräfte und somit für eine ausreichende Grünfestigkeit. Unterstützend wirkt das Hydratisieren des Calciumoxids. Nach Beendigung der Pelletierung wurden die Agglomerate einer sorgfältigen Trocknung unterzogen. Die Trocknung erfolgte bei 200°C für 48 Stunden. Nach der Trocknung erfolgte der Einsatz der Pellets in einem rotierenden metallurgischen Gefäß, das als TBRC ausgeführt und feuerfest ausgemauert war. Der Energieeintrag für die gezielte thermische Behandlung erfolgte durch ein $CH_4/O_2$-Brenner, der durch gesteuerte und/oder geregelte $O_2$-Zufuhr auch für die kontrollierten oxidierenden Bedingungen während des Prozesses sorgte. Die Behandlung erfolgte dabei in Chargen von 40 kg.

Die gewählten Prozessparameter während der gezielten thermischen Behandlung unter kontrollierten oxidierenden Bedingungen sind in nachfolgender Tabelle 4 aufgelistet.

Tabelle 4: Gewählte Prozessparameter

| Prozessparameter | Wert |
|---|---|
| Temperatur (T) | 1100 °C |
| Verbrennungsluftverhältnis ($\lambda$) | 1,2 |
| Drehzahl (n) | 2 U/min |
| Aufheizrate ($\Delta$T) | 150 °C/min |
| Behandlungsdauer (t) | 2,5 h |

Während der Behandlung wurde neben einer dauerhaft installierten Temperaturmessung der Ofenatmosphäre auch die vorherrschende Temperatur in der Schüttung in regelmäßigen Abständen überprüft. Ein Probennahme-Intervall von 10 min sorgte für eine ständige Überwachung des Prozessfortschrittes der Entfernung der Halogene und anderer flüchtiger Bestandteile (z. B. über Filterhaus) aus dem Stahlwerksstaub, im Rahmen der gezielten thermischen Behandlung unter kontrollierenden oxidierenden Bedingungen.

Nach abgeschlossener Behandlung wurden die behandelten Staubagglomerate aus dem Ofen entfernt und zur Abkühlung auf Raumtemperatur in eine Stahlkokille übergeführt. Nach vollständiger Abkühlung erfolgte eine Beprobung für die Endanalyse. Die Ergebnisse der Messungen können der nachstehenden Tabelle 5 entnommen werden.

Tabelle 5: Ergebnisse der Entfernung von Halogenen und anderen flüchtigen Bestandteilen aus Stahlwerksstaub mithilfe gezielter thermischer Behandlung und kontrollierten oxidierenden Bedingungen.

| Versuch 1 | Elektrolichtbogenofenstaub | |
|---|---|---|
| | Vor der Behandlung | Nach der Behandlung |
| Masse | 40.00 kg | 33,48 kg |

(fortgesetzt)

| Versuch 1 | Elektrolichtbogenofenstaub | |
|---|---|---|
| | Vor der Behandlung | Nach der Behandlung |
| Elemente | Gew.-% | |
| Cl | 5,2 | 0,26 |
| F | 0,49 | 0,05 |
| Na | 2,2 | 0,68 |
| K | 1,7 | 0,22 |
| Pb | 2,8 | 0,11 |
| Cd | 0,12 | <0,02 |
| Zn | 35,2 | 38,24 |
| Versuch 2 | Mischstaub | |
| | Vor der Behandlung | Nach der Behandlung |
| Masse | 40,00 kg | 34,60 kg |
| Elemente | Gew.-% | |
| Cl | 4,25 | 0,23 |
| F | 0,4 | 0,08 |
| Na | 1,8 | 1,00 |
| K | 2,45 | 0,42 |
| Pb | 2,9 | 0,30 |
| Cd | 0,1 | <0,01 |
| Zn | 30,5 | 33,1 |

Aus den Messergebnissen ist ersichtlich, dass die Zinkgehalte in beiden Fällen signifikant ansteigen. Das ist auf die Entfernung der Halogene und anderen flüchtigen Bestandteilen zurückzuführen.

Die Chlor- und Fluorgehalte lassen sich hingegen durch die gezielte thermische Behandlung unter kontrollierten oxidierenden Bedingungen markant absenken. Außerdem zeigt sich eine signifikante Entfernung der Elemente Blei, Cadmium, Kalium und Natrium.

Es ist somit mit Hilfe des erfindungsgemäßen Verfahrens zum Entfernen von Halogenen und anderen flüchtigen Bestandteilen aus Stahlwerksstäuben mittels gezielter thermischer Behandlung unter kontrollierten oxidierenden Bedingungen möglich, Stahlwerks- und andere metallhaltige Stäube zu großen Teilen von den Verunreinigungen wie vorzugsweise Cl, F, Cd, Pb, K und Na zu befreien. Diese Elemente sind hauptverantwortlich für die verminderte Zinkoxid-Qualität bei den heute etablierten Recyclingverfahren von Stahlwerksstaub. Damit ist es möglich, hochreines Zinkoxid aus Stahlwerksstäuben zu gewinnen und dadurch einerseits die Reststoffbelastung der primären Zinkindustrie drastisch zu senken und andererseits eine zusätzliche Aufwertung durch mögliche Anwendungen im Markt für hochqualitatives Zinkoxid (Reifenindustrie, Keramik, chemische Industrie, etc.) zu erlangen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können.

**Patentansprüche**

1. Ein Verfahren zum Herstellen eines Wertstoff-Produkts aus einem Industriestaub, wobei das Verfahren aufweist:

Bereitstellen des Industriestaubes, welcher zumindest einen Wertstoff und eine erste Konzentration flüchtiger Bestandteile aufweist, an eine Heizvorrichtung mit einer Betriebstemperatur von 600°C oder mehr;
Aufbereiten des Industriestaubes mittels der Heizvorrichtung, wobei das Aufbereiten aufweist:

Aufheizen des Industriestaubes mit einer Rate von 20°C pro Minute oder mehr,
thermisches Behandeln des Industriestaubes mittels der Heizvorrichtung mit einer Behandlungstemperatur im Bereich 900°C bis 1200°C, insbesondere im Bereich 1000°C bis 1100°C, für 30 Minuten oder mehr, und
Steuern und/oder Regeln der oxidierenden Bedingungen während des Aufbereitens,

wobei das Aufbereiten aufweist: zumindest teilweises Entfernen der flüchtigen Bestandteile aus dem Industriestaub; und
Bereitstellen des Wertstoff-Produkts.

2. Das Verfahren gemäß Anspruch 1,
wobei das Wertstoff-Produkt den zumindest einen Wertstoff und eine zweite Konzentration flüchtiger Bestandteile aufweist, welche geringer ist als die erste Konzentration flüchtiger Bestandteile.

3. Das Verfahren gemäß Anspruch 1 oder 2,
wobei die flüchtigen Bestandteile ein Halogen, insbesondere Fluor und/oder Chlor, aufweisen; und/oder
wobei die flüchtigen Bestandteile ein Metall aufweisen,
insbesondere wobei das Metall zumindest eines aus der Gruppe aufweist, welche besteht aus Blei, Cadmium, Natrium, Kalium, Calcium.

4. Das Verfahren gemäß einem beliebigen der vorhergehenden Ansprüche, wobei der Wertstoff ein Metalloxid, insbesondere Zinkoxid und/oder Kupferoxid, aufweist.

5. Das Verfahren gemäß einem beliebigen der vorhergehenden Ansprüche, aufweisend zumindest eines der folgenden Merkmale:

wobei der Industriestaub im Wesentlichen in Form von Staubpartikeln vorliegt, insbesondere in Form von Staubpartikeln, die aus der Metallgewinnung und Metallverarbeitung stammen;
wobei die Staubpartikel Stahlwerkstaub oder Staub aus der Kupferindustrie aufweisen,
insbesondere zumindest einen Staub aus der Gruppe, welche besteht aus: Elektrolichtbogenofenstaub, Staub aus einem Gießereibetrieb, Staub aus integrierten Stahlherstellungsrouten, Staub aus einem Sinterbetrieb;
wobei das Bereitstellen des Industriestaubes ferner aufweist:
Agglomerieren der Staubpartikel des Industriestaubes;
wobei das Aufbereiten Batch-weise, insbesondere mittels Chargen von agglomeriertem Industriestaub, durchgeführt wird;
wobei das Bereitstellen des Industriestaubes ferner aufweist:
Trocknen des, insbesondere agglomerierten, Industriestaubes;
wobei das thermische Behandeln ferner aufweist:
Durchmischen des Industriestaubes, insbesondere mittels zumindest zeitweisem Rotieren durch zumindest einen Teil der Heizvorrichtung.

6. Das Verfahren gemäß einem beliebigen der vorhergehenden Ansprüche, wobei das thermische Behandeln ferner aufweist:
Steuern und/oder Regeln des Wasserdampfs in der beheizten Atmosphäre derart, dass ein Wasserdampf Partialdruck von 0,1 bar oder mehr vorliegt.

7. Das Verfahren gemäß einem beliebigen der vorhergehenden Ansprüche, wobei das Steuern und/oder Regeln der oxidierenden Bedingungen aufweist:
Zuführen eines Oxidationsmittels, insbesondere Sauerstoff und/oder Luft, derart, dass das Verbrennungsluftverhältnis überstöchiometrisch ist, insbesondere in dem Bereich 1,1 bis 1,5, weiter insbesondere in dem Bereich 1,3 bis 1,4, ist.

8. Das Verfahren gemäß einem beliebigen der vorhergehenden Ansprüche, wobei der Industriestaub eine erste Konzentration des zumindest einen Wertstoffs aufweist, und wobei das Aufbereiten ferner aufweist:
Aufkonzentrieren des Wertstoffs derart, dass das aufbereitete Wertstoff-Produkt eine zweite Konzentration des zumindest einen Wertstoffs aufweist, welche größer ist als die erste Konzentration.

**9.** Das Verfahren gemäß einem beliebigen der vorhergehenden Ansprüche, wobei das Aufbereiten ferner aufweist:

zumindest teilweises Hemmen einer chemischen Reaktion eines Halogens und/oder eines Metalls zu einem nichtflüchtigen Bestandteil, insbesondere Calciumfluorid beziehungsweise Calciumchlorid; und/oder Fördern einer chemischen Reaktion eines Halogens und/oder eines Metalls zu einem flüchtigen Bestandteil, insbesondere Bleifluorid.

**10.** Das Verfahren gemäß einem beliebigen der vorhergehenden Ansprüche, wobei das Verfahren zumindest eines der folgenden Merkmale aufweist:

Entfernen von 90%, insbesondere 95%, oder mehr von zumindest einem aus der Gruppe, welche besteht aus Chlor, Blei, und Cadmium, aus dem Industriestaub; Entfernen von 80%, insbesondere 85% oder mehr Fluor und/oder Kalium aus dem Industriestaub; Entfernen von 45%, insbesondere 50%, oder mehr Natrium aus dem Industriestaub.

**11.** Das Verfahren gemäß einem beliebigen der vorhergehenden Ansprüche, wobei das Aufheizen des Industriestaubes mit einer Rate von 30°C pro Minute oder mehr, insbesondere 50°C pro Minute oder mehr, weiter insbesondere 100°C pro Minute oder mehr, weiter insbesondere 150°C/min oder mehr, durchgeführt wird.

**12.** Das Verfahren gemäß einem beliebigen der vorhergehenden Ansprüche, wobei das thermische Behandeln des Industriestaubes mittels der Heizvorrichtung für 60 Minuten oder mehr, insbesondere 120 Minuten oder mehr, weiter insbesondere 180 Minuten oder mehr, durchgeführt wird.

**13.** Ein Verfahren zum Bereitstellen von Metalloxid, insbesondere Zinkoxid und/oder Kupferoxid, aufweisend:

Herstellen eines Wertstoff-Produkts gemäß einem beliebigen der vorhergehenden Ansprüche und/oder Verwenden eines entsprechend hergestellten Wertstoff-Produkts; und weiteres Aufbereiten des Wertstoff-Produkts, um ein hochreines Metalloxid und/oder ein sekundäres Metalloxid bereitzustellen.

**14.** Das Verfahren gemäß Anspruch 13,
wobei das weitere Aufbereiten des Wertstoff-Produkts Elektrolyse-frei erfolgt.

**15.** Ein Wertstoff-Produkt, welches aus Industriestaub, insbesondere Stahlwerkstaub, hergestellt ist, und welches aufweist:

Zinkoxid, insbesondere zumindest 10 Gewichtsprozent Zink, und
zumindest eines der folgenden Merkmale:

eine Fluor-Konzentration von 0,2 Gewichtsprozent oder weniger;
eine Halogen-Konzentration von 2 Gewichtsprozent oder weniger;
eine Blei-Konzentration von 1 Gewichtsprozent oder weniger;
eine Cadmium-Konzentration von 0,05 Gewichtsprozent oder weniger;
eine Konzentration flüchtiger Bestandteile von 5 Gewichtsprozent oder weniger.

**Europäisches Patentamt**
**European Patent Office**
**Office européen des brevets**

# EUROPÄISCHER RECHERCHENBERICHT

Nummer der Anmeldung

EP 20 19 5687

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 216 419 A2 (ADELT MILAN [CZ]; RACLAVSKY MILAN [CZ] ET AL.) 11. August 2010 (2010-08-11) | 1,5,12 | INV. B07B4/00 B09B3/00 |
| Y | * Absätze [0024], [0029]; Anspruch 1 * | 2-4,8, 10,13-15 | C22B7/00 C22B19/30 |
| A |  | 6,7,9,11 | C22B19/38 |
|  | ----- |  |  |
| Y | DE 10 2015 206170 A1 (SGL CARBON SE [DE]) 13. Oktober 2016 (2016-10-13) | 2-4,8, 10,13-15 |  |
| A | * Anspruch 1 * | 6,7,9,11 |  |
|  | ----- |  |  |
| Y | DE 10 2016 122087 B3 (SALZGITTER FLACHSTAHL GMBH [DE]) 29. März 2018 (2018-03-29) | 2-4,8, 10,13-15 |  |
| A | * Anspruch 1 * | 6,7,9,11 |  |
|  | ----- |  |  |
| Y | TW 200 904 995 A (UNIV NAT CENTRAL [TW]) 1. Februar 2009 (2009-02-01) | 2-4,8, 10,13-15 |  |
| A | * Absätze [0004], [0010]; Anspruch 1 * | 6,7,9,11 |  |
|  | ----- |  |  |
| Y | EP 2 937 427 A1 (POSCO [KR]) 28. Oktober 2015 (2015-10-28) | 2-4,8, 10,13-15 | RECHERCHIERTE SACHGEBIETE (IPC) |
| A | * Absatz [0029]; Ansprüche 9-12 * ----- | 6,7,9,11 | B07B C22B C21C B09B C21B |

Der vorliegende Recherchenbericht wurde für alle Patentansprüche erstellt

| Recherchenort | Abschlußdatum der Recherche | Prüfer |
|---|---|---|
| München | 25. Februar 2021 | Devilers, Erick |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 20 19 5687

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

25-02-2021

| Im Recherchenbericht angeführtes Patentdokument | Datum der Veröffentlichung | Mitglied(er) der Patentfamilie | Datum der Veröffentlichung |
|---|---|---|---|
| EP 2216419 A2 | 11-08-2010 | CZ 301924 B6<br>EP 2216419 A2<br>ES 2496666 T3<br>PL 2216419 T3 | 04-08-2010<br>11-08-2010<br>19-09-2014<br>27-02-2015 |
| DE 102015206170 A1 | 13-10-2016 | DE 102015206170 A1<br>WO 2016162138 A1 | 13-10-2016<br>13-10-2016 |
| DE 102016122087 B3 | 29-03-2018 | KEINE | |
| TW 200904995 A | 01-02-2009 | KEINE | |
| EP 2937427 A1 | 28-10-2015 | AU 2012397402 A1<br>BR 112015014606 A2<br>CN 104870660 A<br>EP 2937427 A1<br>KR 20140079224 A<br>WO 2014098300 A1 | 09-07-2015<br>11-07-2017<br>26-08-2015<br>28-10-2015<br>26-06-2014<br>26-06-2014 |

EPO FORM P0461

Für nähere Einzelheiten zu diesem Anhang : siehe Amtsblatt des Europäischen Patentamts, Nr.12/82